# EUROPÄISCHE PATENTANMELDUNG

(11) **EP 2 365 596 A2**
(43) Veröffentlichungstag der Anmeldung: **14.09.2011**
(21) Anmeldenummer: 11157777.1
(22) Anmeldetag: 10.03.2011
(51) Int. Cl.: H02G 3/04, F16L 3/26

(54) **Kabelrinne**

(30) Priorität: 10.03.2010 EP 10156069
(71) Anmelder: Zurecon AG, 8003 Zürich (CH)
(72) Erfinder: Pfluger, Gerd, CH-4625, Oberbuchsiten (CH)
(74) Vertreter: Rutz & Partner

(57) **Zusammenfassung**

Die aus Metall gefertigte Kabelrinne (1), die der Aufnahme von zu installierenden Kabeln (5) dient, weist ein Bodenteil auf, welches an einer ersten und einer zweiten Seite, die einander gegenüberliegen, je mit einer Seitenwand (12) verbunden ist, die einstückig gefertigt sind und ein Fussstück (121) sowie ein dazu geneigtes Wandstück (122) aufweisen. Erfindungsgemäss besteht das Bodenteil aus vereinzelten plattenförmigen Bodenelementen (11), deren Materialdicke geringer ist als die Materialdicke der Seitenwände (12) und die je an einer ersten und einer zweiten Seite durch formschlüssige Verbindungen (9) mit den Fussstücken (121) der Seitenwände (12) verbunden sind, wobei die Bodenelemente (11) entnehmbare, verschiebbare oder drehbare Verschlussstücke (118A, 118B, 118C) halten, anhand derer eine der Durchführung der Kabel 5 dienende Apertur (1180) im Bodenteil freilegbar ist.

## Beschreibung

Die Erfindung betrifft eine Kabelrinne nach dem Oberbegriff des Patentanspruchs 1.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität in Kabelrinnen gelegt und so z.B. von einem Schaltfeld oder einer Zentrale zu Verbrauchern geführt. Kabelrinnen dieser Art sind beispielsweise aus dem [1], Produktkatalog der LANZ OENSINGEN AG, Juni 2009, bekannt.

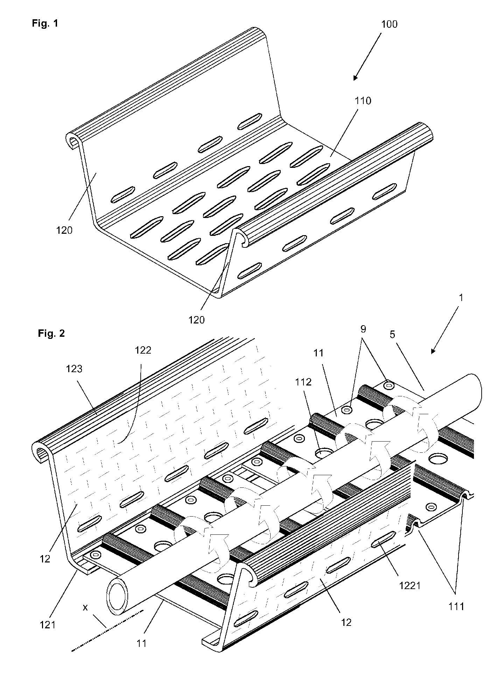

Die in [1], Seite 44 und nachstehend in Figur 1 gezeigten Kabelrinnen weisen zwei durch ein Bodenteil miteinander verbundene Seitenwände auf und sind in der Regel mit Längsschlitzen versehen, die der Luftkühlung der eingelegten Kabel dienen. Somit wird durch die Kabelrinnen ein auf drei Seiten geschlossener Kanal gebildet, welcher die eingelegten Kabel optimal schützt und gleichzeitig insbesondere von der Unterseite optisch abdeckt, so dass die installierten Kabel, die ungeordnet aufeinander liegen, von unten nicht sichtbar sind und ein optimaler ästhetischen Eindruck erzielt wird. Dabei ist jedoch zu beachten, dass die Längsschlitze der Kabelrinnen nach der Installation regelmässig mindestens zum Teil durch Kabel abgedeckt sind, weshalb eine wünschbare Kühlluftzufuhr zumeist nicht gewährleistet ist.

Weiter ist in [1] gezeigt, dass die Kabelrinnen entlang ihres Weges oft verschiedene Richtungsänderungen erfahren. Es wird daher vorgesehen, dass die Abschnitte der Kabelrinnen entsprechend miteinander koppelbar sind, so dass laterale oder vertikale Wegänderungen realisierbar sind. Dazu werden vom Hersteller entsprechend Kopplungselemente zur Verfügung gestellt, mittels derer Richtungsänderungen realisiert werden können. Die Planung der Kabelrinnenführung wird basierend auf der geplanten Infrastruktur eines Gebäudes sowie den individuellen Wünschen des Architekten festgelegt, welche insbesondere auch ästhetische Anforderungen berücksichtigen. Gestützt auf die erstellten Pläne werden in der Folge die Kabelrinnen und Kopplungsstücke in entsprechender Anzahl und mit den erforderlichen Abmessungen bestellt. Sofern bei der Planung Änderungen oder Fehler auftreten, so sind die bereitgestellten Kabelrinnen und Kopplungselemente gegebenenfalls nicht mehr passend und müssen ergänzt oder ausgetauscht werden. Wenn zum Beispiel neu eine Abzweigung vorzusehen ist, so sind entsprechend angepasste Abschnitte von Kabelrinnen erforderlich. Ein Klempner kann eine Kabelrinne auch bearbeiten, um eine entsprechende Änderung vorzusehen. Solche Spezialarbeiten sind jedoch sehr aufwändig und hinterlassen zumeist nicht denselben ästhetischen Eindruck, wie original hergestellte Bauteile. Der Installateur wird daher eher einen zeitlichen Verzug in Kauf nehmen und passende Kabelrinnen-Elemente nachbestellen und installieren. Während dieser Aufwand bei Neuinstallationen zumeist überschaubar ist, resultieren bei bestehenden Installationen, bei denen Änderungen vorzusehen sind, zumeist erhebliche Aufwendungen und zeitliche Verzögerungen.

Wie dies in der DE 20 2008009852 U1, beschrieben ist, müssen Kabelrinnen stabil und leicht montierbar sein. Um eine gewünschte Stabilität zu erzielen, wird daher relativ dickes Blech verwendet, welches der Kabelrinne an den kritischen Stellen die erforderliche Stabilität verleiht. Aufgrund dieses Sachverhalts erfordern gattungsgemässe Kabelrinnen einen entsprechend hohen Materialaufwand.

Als Rohmaterial zur Fertigung einer Kabelrinne wird vorzugsweise ein gelochtes Blech in entsprechender Materialdicke verwendet, welches anschliessend z.B. durch Tiefziehen bzw. Zugdruckumformen bearbeitet wird. Dabei ist zu beachten, dass bei diesem Verfahren, welches in der Norm DIN 8584 definiert ist, auch unerwünschte Einformungen des gelochten Blechs und somit Strukturänderungen auftreten. Die Möglichkeiten zur Ausgestaltung der Kabelrinnen sind daher beschränkt. Verschiedene Formen können zudem überhaupt nicht oder nur mit sehr hohem Aufwand realisiert werden. Gegebenenfalls muss die gefertigte Kabelrinne in einem weiteren Prozess mit entsprechendem Aufwand nachbearbeitet werden.

Ferner ist zu beachten, dass für die genannten Verfahren teure Werkzeuge erforderlich sind, welche über entsprechend hohe Stückzahlen der gefertigten Produkte zu amortisieren sind. Eine flexible Anpassung der gefertigten Kabelrinnen an die Bedürfnisse der Anwender ist daher nur schwer möglich.

Die Endstücke der in der DE 20 2008009852 U1 gezeigten Kabelrinnen sind ferner derart ausgestaltet, dass sie entlang einer Achse ausgerichtet miteinander verbunden werden können. Eine Wegänderung ist dabei kaum realisierbar.

Aus der EP 0 532 460 A2 und der DE 28 29 205 A1 sind Kabelträger bekannt, deren Seitenwände durch Querstege miteinander verbunden sind. Dadurch resultiert eine Konstruktion in der Art einer Leiter, die es erlaubt, Kabel zwischen den Querstegen nach unten weg zu führen. Dabei resultiert jedoch kein einheitliches Bodenteil, welches die Kabel vollständig schützt und auch optisch abdeckt.

Aus der US 3 680 817 A ist eine Kabelrinne bekannt, bei der die Seitenwände ebenfalls durch Querstege miteinander verbunden sind, zwischen denen Bodenelemente eingefügt werden. Auf diese Weise resultiert ein einheitliches Bodenteil, welches jedoch mit erheblichen Konstruktionsaufwand und Materialaufwand zusammengesetzt werden muss.

Aus der DE 29 11 100 A1 ist eine Kabelrinne bekannt, bei der zwei Seitenwände anhand von Verbindungsmittel mit einem einheitlichen Bodenteil verbindbar sind.

Aus der DE 12 40 574 A ist eine Kabelrinne bekannt, bei der zwei Seitenwände mit einem Bodenteil verbindbar sind, welches aus mehreren Elementen besteht die beidseitig je mit einer am Fuss eine Seitenwand vorgesehenen Trägerlippe durch Punktschweissung verbunden. Nach dem Verbinden der Seitenwände mit den Bodenelementen entspricht die gefertigte Kabelrinne entspricht funktionell einer konventionellen Kabelrinne, in der Kabel nur von einem zum anderen Ende geführt werden können.

Der vorliegenden Erfindung liegt daher die Aufgabe zugrunde, eine verbesserte Kabelrinne zu schaffen.

Insbesondere ist eine Kabelrinne zu schaffen, die bei der Installation oder bei späteren Änderungen der Infrastruktur flexibel an die Bedürfnisse des Anwenders adaptierbar ist.

Insbesondere sollen Wegänderungen der Kabel während der Installation der Kabelrinnen und auch nach deren Installation mit geringem Aufwand realisierbar sein.

Die neue Kabelrinne soll ferner erlauben, Kabel schonend, geordnet und gut belüftet aufzunehmen.

Ferner soll die neue Kabelrinne mit reduziertem Fertigungsaufwand und reduziertem Materialaufwand hergestellt werden können.

Weiterhin soll die Kabelbahn eine erhöhte Festigkeit aufweisen und längere Distanzen überbrücken können.

Diese Aufgabe wird mit einer Kabelrinne gelöst, welche die in Anspruch 1 angegebenen Merkmale aufweist. Vorteilhafte Ausgestaltungen der Erfindung sind in weiteren Ansprüchen angegeben.

Die aus Metall gefertigte Kabelrinne, die der Aufnahme von zu installierenden Kabeln dient, weist ein Bodenteil auf, welches an einer ersten und einer zweiten Seite, die einander gegenüberliegen, je mit einer Seitenwand verbunden ist, die einstückig gefertigt sind und ein Fussstück sowie ein dazu geneigtes Wandstück aufweisen.

Erfindungsgemäss besteht das Bodenteil aus vereinzelten plattenförmigen Bodenelementen, deren Materialdicke geringer ist als die Materialdicke der Seitenwände und die je an einer ersten und einer zweiten Seite durch formschlüssige Verbindungen mit den Fussstücken der Seitenwände verbunden sind, wobei die Bodenelemente entnehmbare, verschiebbare oder drehbare Verschlussstücke halten, anhand derer eine der Durchführung der Kabel dienende Apertur im Bodenteil freilegbar ist.

Mittels der Bodenelemente kann daher ein durchgehender oder durch Öffnungen oder Schlitze durchbrochener Boden für die Kabelrinne mit reduziertem Materialaufwand geschaffen werden. Diese Lösung weist vielfältige weitere Vorteile auf. Die einstückigen Seitenwände, die eine grössere Materialdicke aufweisen als die Bodenelemente, verleihen der Kabelrinne eine hohe Tragkraft und verhindern das Durchbiegen unter Last bzw. nach dem Einlegen der Kabel. Die beiden Seitenwände können dabei identisch ausgestaltet sein und daher mit reduziertem Aufwand hergestellt werden.

Die Bodenelemente dienen nicht nur dem Stützen und der optischen Abdeckung der eingelegten Kabel von unten. Vielmehr können die Bodenelemente mit minimalem Aufwand individuell bearbeitet und an die jeweiligen Bedürfnisse des Anwenders angepasst werden. Beispielsweise können vorzugsweise mit Anhalsungen versehene Öffnungen vorgesehen werden, durch die die Kabel aus der Kabelrinne geführt werden können. Ferner können geschwächte Materialzonen oder geschwächte Materiallinien, wie Perforationen vorgesehen werden, welche vom Handwerker bedarfsweise aufgebrochen werden können, um einen Durchlass für eines oder mehrere Kabel zu schaffen. Ferner kann eines der Bodenelemente auch mit relativ geringem Aufwand entfernt werden, um beispielsweise einen Kabelschacht an die Kabelrinne anzuschliessen.

In einer besonders bevorzugten Ausgestaltung ist vorgesehen, dass zwischen wenigstens einem von zwei benachbarten Bodenelementen und den Fussstücken der Seitenwände wenigstens ein Verschlussstück längs oder quer zur Laufrichtung der Kabel verschiebbar gehalten ist, welches der Freilegung einer der Durchführung von Kabeln dienenden Apertur zwischen den beiden benachbarten Bodenelementen wahlweise ermöglicht. Das verschiebbare Verschlussstück deckt im Normalfall die Apertur ab und wird im Bedarfsfall seitlich bzw. vorwärts oder rückwärts unter eines der Bodenelemente geschoben. Durch die freigelegte Apertur hindurch können in der Folge Kabel zu- oder weggeführt werden. Sollte bei Nachinstallationen der Kabelrinne ein Kabel neu zugeführt oder ein in der Kabelrinne verlegtes Kabel an einer bestimmten Stelle weggeführt werden, kann der Handwerker die Kabelrinne innerhalb weniger Sekunden entsprechend anpassen und eine passende Apertur öffnen. In die Kabellücke wird allenfalls noch ein Kunststoffeinsatz eingefügt, welcher eine schonende Umlenkung der Kabel erlaubt. Mit der erfindungsgemässen Kabelrinne kann daher eine beliebige Infrastruktur mit geringem Aufwand erstellt und geändert werden. Änderungen der Kabelwege, die aufgrund von Planungsänderungen oder Neuinstallationen erforderlich sind, können rasch vollzogen werden. Da die Änderbarkeit der Kabelrinne systemimmanent ist, treten vollzogene Änderungen nicht störend in Erscheinung, sondern hinterlassen ebenfalls einen professionellen Eindruck.

Für die praktisch uneingeschränkte Möglichkeit zur Bearbeitung der Bodenelemente sind keine teuren Werkzeuge erforderlich, wie dies für das Tiefziehen einer Kabelrinne erforderlich wäre. Die Bodenelemente können mit einer einfachen Stanzmaschine seriell bearbeitet, insbesondere mit Einformungen und Öffnungen versehen werden. Anhand der Einformungen, die in die Kabelrinne hineinragen, können die Bodenelemente mit einer hohen Biegefestigkeit versehen werden. Dazu werden schmale Einformungen bzw. Sicken in die Bodenelemente eingearbeitet, welche nach der Verbindung der Bodenelemente mit den Seitenwänden vorzugsweise gerade von einer Seitenwand zur andern verlaufen und in die Kabelrinne mit einer Höhe von vorzugsweise 1-10mm hinein ragen. Durch diese Massnahme kann selbst bei sehr dünnen Bodenelementen eine hohe Biegefestigkeit erreicht werden, welche verhindert, dass die Bodenelemente sich nach dem Einlegen der Kabel durchbiegen.

Durch die Einformungen bzw. Sicken wird ferner verhindert, dass die eingelegten Kabel in den Bodenelementen vorgesehene Ventilationsöffnungen abdecken, wodurch die Belüftung und Entlüftung der eingelegten Kabel behindert würde.

In vorzugsweisen Ausgestaltungen werden ferner Einsenkungen in den Einformungen vorgesehen, die der geordneten Aufnahme eines Kabels dienen. Durch diese Massnahme werden die eingelegten Kabel nicht nur angehoben, sondern auch voneinander getrennt. Durch die Wahl entsprechender Abstände zwischen den Einsenkungen resultieren eine übersichtliche Installation sowie eine elektrische und thermische Entkopplung der einzelnen Kabel. Die Kabel werden daher nicht nur optimal gekühlt, sondern es wird auch die Gefahr störender Interferenzen reduziert.

Nebst der vorteilhaften Funktionalität der neuen Kabelrinne ist ferner der reduzierte Materialaufwand von besonderer Bedeutung. Durch die Wahl von Bodenplatten, deren Materialdicke um einen vorzugsweise im Bereich von 2-5 liegenden Faktor geringer ist als die Materialdicke der Seitenwände kann erheblich Material eingespart werden. Sofern die Materialdicke der Seitenwände 1,25 mm beträgt, so werden z.B. Bodenelemente in typischen Ausgestaltungen mit einer Materialdicke von 0,3-0,5 mm gewählt.

Die Verbindung der Fussstücke mit den darauf ruhenden Bodenelementen erfolgt vorzugsweise mittels Durchsetzfügen, bekannt auch als Toxen. Durchsetzfügen ist ein Verfahren zum Verbinden von Blechen ohne Verwendung eines Zusatzwerkstoffes. Man kann es sowohl zu den Fügeverfahren als auch zu den Umformverfahren rechnen, da die Verbindung durch Umformen des Werkstoffs erreicht wird. Eine Untergruppe des Fügens ist nach DIN 8593 das Fügen durch Umformen. Das Fügen ist wiederum aufgeteilt in Fügen durch Umformen drahtförmiger Körper, bei Blech-, Rohr- und Profilteilen und durch Nietverfahren. Nach DIN 8593 ist dem Fügen durch Umformen bei Blech-, Rohr und Profilteilen neben Quetschen und Verpressen unter anderem das Durchsetzfügen, auch Clinchen genannt, zugeordnet. Ein Vorteil des Clinchens ist, dass kein Vorlochvorgang durchgeführt wird (siehe [3], http://de.wikipedia.org/wiki/Durchsetzfügen).

Auch aufgrund der Vermeidung von Zusatzwerkstoffen können die erfindungsgemässen Kabelrinnen mit minimalem Aufwand gefertigt werden. Die relativ dünnen Bodenelemente können dabei besonders vorteilhaft bearbeitet werden.

Die formschlüssigen Verbindungen werden vorzugsweise in gleichen Abständen von beispielsweise 75mm vorgesehen. Die Bodenelemente können sich dabei überlappen oder können voneinander getrennt sein. Sofern die Länge eines Bodenelements im Bereich von 30 cm liegt, wird dieses daher vorzugsweise mit beidseits je vier formschlüssigen Verbindungen mit den Fussstücken der Seitenwände verbunden. Der gesamte Herstellungsvorgang kann daher mit hoher Kadenz und minimalem Aufwand durchgeführt werden.

An den beiden Enden der gefertigten Kabelrinne werden vorzugsweise Querstreben vorgesehen, welche es erlauben, benachbarte Kabelrinnen in einfacher Weise miteinander zu koppeln. Die Querstreben sind beispielsweise Profilstäbe, wie ein C-Profil, welche es erlauben, Verbindungselemente zu montieren. Querstreben können auch innerhalb der Kabelrinne vorgesehen werden. Beispielsweise wird zwischen zwei Bodenelementen eine Querstrebe vorgesehen, welche die Bodenelemente vorzugsweise überlappt und festklemmt. Ein derart gehaltenes Bodenelement kann durch Krafteinwirkung bedarfsweise wieder gelöst werden. Die Querstreben werden vorzugsweise ebenfalls anhand von Durchsetzfügen oder durch eine andere Verbindungstechnik, wie Nieten oder Schrauben, mit den Fussstücken der Seitenwände verbunden.

Nachfolgend wird die Erfindung anhand von Zeichnungen näher erläutert. Dabei zeigt:
- Fig. 1: eine bekannte einstückige Kabelrinne 100 mit zwei Seitenwänden 120, die an einander gegenüberliegenden Seiten eines Bodenteils 110 angeformt sind;
- Fig. 2: eine erfindungsgemässe Kabelrinne 1 mit zwei Seitenwänden 12, deren Fussstücke 121 durch vereinzelte plattenförmige Bodenelemente 11 miteinander verbunden sind, die von der ersten zur zweiten Seitenwand verlaufende Einformungen 111 aufweisen;
- Fig. 3: die Kabelrinne 1 von Figur 1 mit zwei Bodenelementen 11, deren Einformungen 111 mit Einsenkungen 1111 und mit Lochungen 1112 für Niederhaltebügel 1113 versehen sind und zwischen denen mehrere verschiebbar gehaltene Verschlussstücke 118 vorgesehen sind, die wahlweise geöffnet werden können;
- Fig. 3a: die Seitenwand 12 der Kabelrinne 1 von Figur 3 in einer vorzugsweisen Ausgestaltung, bei der das Verschlussstück 118A von einem verjüngten Endstück 1211 des Fussstücks 121 verschiebbar gehalten ist;
- Fig. 4: die Kabelrinne von Figur 3 mit den gegen die Bodenelemente 11 verschobenen Verschlussstücken 118A, die frontseitig abgerundet sind, um die eingelegten Kabel 53, 54 schonend zu lagern;
- Fig. 4a: ein Verschlussstück 118A von Figur 4 in einer Detaildarstellung;
- Fig. 5: die Kabelrinne 1 von Figur 3 mit seitlich verschiebbaren und drehbaren Verschlussstücken 118B, 118C;
- Fig. 6: eine vorzugsweise Ausgestaltung der Kabelrinne 1 von Figur 5 mit Seitenwänden 12 und Bodenelementen 11, die mit Verschlussstücken 118D versehen sind, die vom Installateur wahlweise geöffnet werden können;
- Fig. 7: die Kabelrinne 1 von Figur 2 mit Bodenelementen 11, aus denen Halteelemente 114 ausgeschnitten und ausgeformt sind, mittels denen ein parallel zu den Seitenwänden (12) ausgerichtetes L-Profil 2 gehalten ist; und
- Fig. 7a: ein als T-Profil ausgestaltetes Längsprofil 2, welches in einfacher Weise in gegeneinander gerichtete Halteelemente 114A, 114B eingefügt werden kann.

Figur 1 zeigt eine bekannte einstückige Kabelrinne 100 mit zwei Seitenwänden 120, die an einander gegenüberliegenden Seiten eines Bodenteils 110 angeformt sind. Die Seitenwände 120 und das Bodenteil 110 weisen unabhängig von auftretenden Belastungen über den gesamten Bereich zumindest annähernd dieselbe Materialdicke auf. Die Seitenwände 120 und das Bodenteil 110 weisen Öffnungen für verschiedene Funktionen auf.

Figur 2 zeigt eine erfindungsgemässe Kabelrinne 1 mit zwei Seitenwänden 12, deren Fussstücke 121 durch vereinzelte plattenförmige Bodenelemente 11 miteinander verbunden sind. Die beiden identisch ausgestalteten und mit Öffnungen 1221 versehenen Seitenwände 12 weisen ein Fussstück 121 und ein dazu geneigtes Wandstück 122 auf, an dessen Oberseite ein nach aussen gerolltes Kopfstück 123 vorgesehen ist. Die Bodenelemente 11 sind beidseitig mittels Durchsetzfügen, z.B. Tox-Verbindungen 9, mit den Fussstücken 121 formschlüssig verbunden.

Die Materialdicke D der nach der Installation statisch stark belasteten Seitenwände 12 ist mehrfach grösser als die Materialdicke d der Bodenelemente 11, die einer reduzierten Belastung ausgesetzt sind. Die gewählten Materialdicken sind daher optimal an die auftretenden Lasten angepasst, weshalb ein Minimum an Material eingesetzt wird.

Die Bodenelemente 11 sind ferner mit Ventilationsöffnungen 112 und schmalen Einformungen bzw. Sicken 111 versehen. Die Sicken 111 verlaufen senkrecht zur Hauptachse x der Kabelrinne 1 von einem zum anderen Fussstück 121. Auf diese Weise erhalten die Bodenelemente 11 eine hohe Biegesteifigkeit, welche verhindert, dass sich die Bodenelemente 11 unter der Last der Kabel 5 durchbiegen können. Zu beachten ist, dass die Bodenelemente 11, die beidseits von den Fussstücken 121 der Seitenwände 12 gehalten sind, jeweils nur eine Teillast der Kabel 5 aufnehmen müssen.

Die Sicken 111 verlaufen quer zu den in die Kabelrinne 1 eingelegten Kabel 5, weshalb die Kabel 5 auf den Sicken 111 aufliegen und somit praktisch schwebend gelagert sind. Dadurch wird verhindert, dass die in den Bodenelementen 11 vorgesehenen Ventilationsöffnungen 112 durch Kabel 5 zugedeckt werden. Die Ventilationsöffnungen 112 bleiben daher frei und ermöglichen die Belüftung der eingelegten Kabel 5. Das Kabel 5 wird dabei praktisch über den gesamten Umfang und die gesamte Länge von Luft umströmt und gekühlt. Die Höhe der Sicken 111 wird dabei derart gewählt, dass eine erwünschte Biegefestigkeit sowie eine erwünschte Anhebung der Kabel 5 erzielt werden.

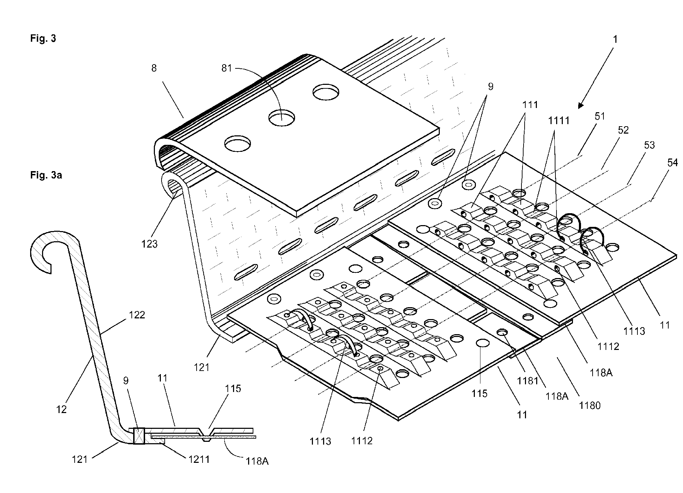

Figur 3 zeigt die Kabelrinne von Figur 2 mit Verschlussstücken 118A in dem durch die Bodenelemente 11 gebildeten Bodenteil. Die plattenförmigen Verschlussstücke 118A sind zwischen den Bodenelementen 11 und den Fussstücken 121 der Seitenwände 12 in axialer Richtung der Kabelrinne 1 verschiebbar gelagert. Durch die Verschlussstücke 118A wird eine Apertur 1180 zwischen den beiden voneinander beabstandeten Bodenelementen 11 verschlossen. Die Bodenelemente 11 und die Verschlussstücke 118 bilden daher einen praktisch durchgehenden Boden, welcher den Einblick in die Kabelrinne 1 verwehrt. Dabei sind in dieser Ausgestaltung mehrere Verschlussstücke 118 vorgesehen, welches erlauben, bestimmte Sektoren der Apertur 1180 zu öffnen und zu verschließen.

Figur 3a zeigt eine vorzugsweise Ausgestaltung der Seitenwand 12, deren Fussstück 121 ein verjüngtes Endstück 1211 aufweist, auf dem die Verschlussstücke 118 verschiebbar gelagert werden. Ferner ist gezeigt, dass das anhand einer Tox-Verbindung 9 mit dem Fussstück 121 verbundene Bodenelement 11 mit wenigstens einem nach unten ragenden Nocken 115 versehen ist, mittels dessen das Verschlussstück 118A in Position gehalten wird. Durch Anheben des Bodenelements 11 bzw. der Nocken 115 wird das Verschlussstück 118A freigegeben und kann verschoben werden. Dabei werden im Verschlussstück 118A vorzugsweise Öffnungen 1181 vorgesehen, in die die Nocken 115 eingreifen können, um das Verschlussstück 118A in der jeweiligen Position zu halten. Die Verschlussstücke 118A können daher mit einem Handgriff von einer ersten zu einer zweiten oder weiteren definierten Position verschoben werden. Wie dies in Figur 3 gezeigt ist, werden die den Kabeln 5 zugewandten Seiten der Verschlussstücke 118A vorzugsweise abgerundet, damit die Kabel 5 auch in Biegezonen schonend gelagert und keinen scharfen Kanten ausgesetzt sind.

In Figur 3 ist ferner gezeigt, dass die in den Bodenelementen 11 vorgesehenen Einformungen bzw. Sicken 111 mit Einsenkungen 1111 versehen sind, in die Kabel 51, 52, 53, 54 geordnet und voneinander getrennt eingelegt werden können. Diese Sicken 111 weisen eine Art Rasterung auf, welche eine automatische Ordnung und Auftrennung der eingelegten Kabel 51, 52, 53, 54 bewirkt.

Ferner sind die Sicken 111 oben oder seitlich mit Öffnungen 1112 versehenen, in die Montageelemente 1113, wie Niederhaltebügel oder Befestigungsschlaufen, einführbar sind.

In Figur 3 ist weiterhin gezeigt, dass die Kabelrinne 1 mit einem vorzugsweise vorgesehenen Deckel 8 abschliessbar ist, der Ventilationsöffnungen 81 aufweist. Auf diese Weise werden die Kabel 5 von allen Seiten geschützt. Typischerweise wird ein Deckel 8 vorgesehen, wenn die Kabelrinne 1 nicht an der Decke montiert ist und die installierten Kabel 5 daher sichtbar sind.

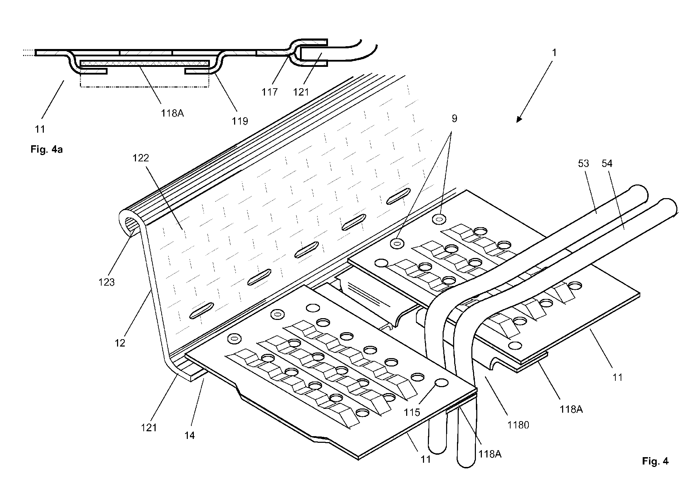

Figur 4 zeigt die Kabelrinne 1 von Figur 3, nachdem zwei einander gegenüberliegende Verschlussstücke 118A gegen das zugehörige Bodenelement 11 verschoben und die Apertur 1180 teilweise geöffnet wurde, um die beiden eingelegten Kabel 53, 54 nach unten wegzuführen. Der Handwerker kann eine Apertur 1180 somit bei Bedarf mit einem Handgriff ganz oder teilweise öffnen und schliessen. Alternativ kann auch nur ein Verschlussstück 118 vorgesehen sein.

Ein weiterer Vorteil der erfindungsgemässen Lösung ist, dass die Verschlussstücke 118A direkt an den Bodenelementen 11 befestigt werden können, wie dies in Figur 4a gezeigt ist. Aus den Bodenelementen 11 werden vorzugsweise Laschen 119 ausgeschnitten oder nach unten gebogen, in die die Verschlussstücke 118A eingeschoben werden. Die Verschlussstücke 118A können wiederum durch Nocken 115 in einer gewählten Position gehalten werden, wie dies in Figur 3a gezeigt ist.

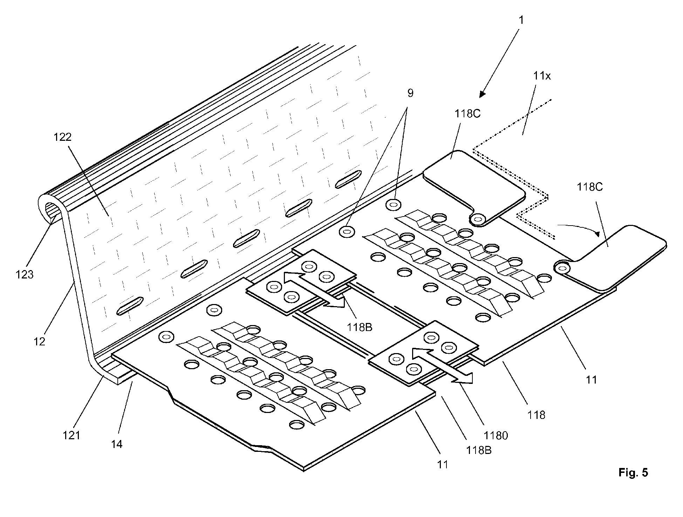

Figur 5 zeigt die Kabelrinne 1 von Figur 3 mit seitlich verschiebbaren und drehbaren Verschlussstücken 118B, 118C. Auch bei dieser Ausgestaltung zeigt sich wiederum, dass sogar anspruchsvolle Ausgestaltungen der Bodenelemente 11 mit geringem Aufwand realisierbar sind. Die Verschlussstücke 118A, 118B, 118C können beliebig kombiniert und optimal an die Bedürfnisse des Anwenders angepasst werden.

Dabei werden die Bodenelemente 11 und die Verschlussstücke 118A, 118B, 118C vorzugsweise aneinander angepasst, so dass beispielsweise ein Segment aus einem Bodenelement 11 ausgeschnitten ist, in das ein entsprechendes Verschlussstück 118C hinein verschoben oder gedreht werden kann, wie dies in Figur 5 gezeigt ist.

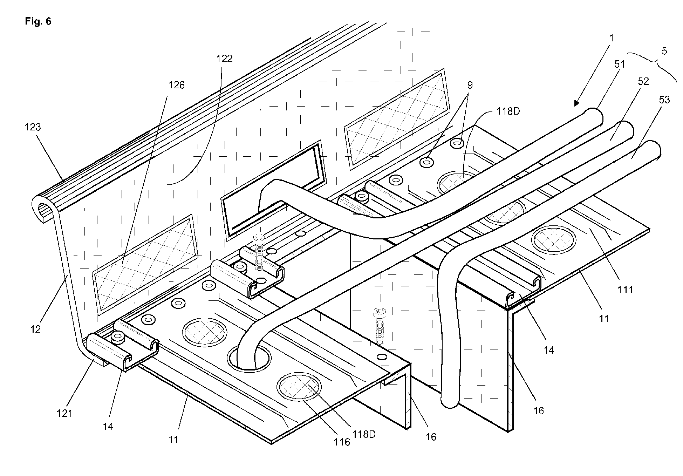

In Figur 6 ist gezeigt, dass die erfindungsgemässe Kabelrinne 1 noch weiter flexibilisiert werden kann. Dazu werden Verschlussstücke 118D in den Bodenelementen 11 vorgesehen, die durch entsprechend verlaufende Materialverdünnungen oder Perforationen 116 definiert sind. Durch das Aufbrechen der Perforation 116 kann ein passendes Verschlussstück 118 mit wenigen Handgriffen entnommen und die entsprechende Apertur geöffnet werden. Bei der Installation oder bei einer späteren Änderung der Infrastruktur kann daher eine Apertur frei gelegt werden, um einzelne Kabel 51, 52, 53 bedarfsweise zuzuführen. Ferner können auch in den Seitenwänden 12 entsprechende Verschlussstücke 126 vorgesehen werden.

Es ist gezeigt, dass die Seitenwände 12 und die Bodenelemente 11 mehrere Verschlussstücke 118D, 126 aufweisen, von denen zwei entfernt sind. Ein erstes Kabel 51 wird durch die in der Seitenwand 12 vorgesehene Apertur und ein zweites Kabel 52 wird durch die in einem Bodenelement 11 vorgesehene Apertur weggeführt. Ein drittes Kabel 53 wird hingegen durch einen Kabelschacht 16, der z.B. mittels Schrauben mit den zugehörigen Querstreben 14 verbunden wird, nach unten geführt.

Die erfindungsgemässe Lösung erlaubt die Realisierung von vielseitig einsetzbaren Kabelrinnen 1, die an wechselnde Bedürfnisse der Anwender anpassbar sind. Die Bodenelemente 11 können mit minimalem Aufwand bearbeitet und mit Elementen versehen werden, welche der Erhöhung der Festigkeit der Bodenelemente 11 oder der Durchführung von Kabeln 5 dienen.

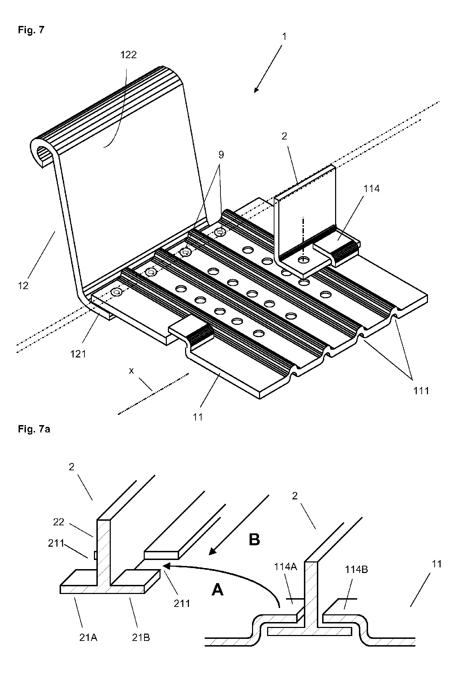

Ganz besonders vorteilhaft ist die in Figur 7 gezeigte Ausgestaltung der Kabelrinne 1 mit Bodenelementen 11 aus denen Laschen bzw. Halteelemente 114 ausgeschnitten sind (siehe auch Figur 4a). Bei dieser Ausgestaltung wird durch die ausgeschnittenen Elemente bzw. Halteelemente 114 nicht ein Verschlussstück, sondern ein Längsprofil 2 gehalten, welches vorzugsweise über mehrere Bodenelemente 11 oder gar entlang der gesamten Kabelrinne 1 verläuft. Das L-Profil-förmige Längsprofil 2 verleiht der Kabelrinne 1 eine sehr hohe Festigkeit und dient gleichzeitig als Ordnungstrennelement. Das Längsprofil 2 kann bedarfsweise eingesetzt werden, falls grössere Lasten zu tragen sind, oder falls ein Ordnungstrennelement benötigt wird. Dabei können Längsprofil 2 oder Ordnungstrennelemente mit passenden Dimensionen und der erforderlichen Beschaffenheit verwendet werden.

In Figur 7a ist ein L-Profil-förmiges Längsprofil 2 gezeigt, welches in einander zugewandte Halteelemente 114A, 114B eingesetzt wird. Damit das Längsprofil 2 problemlos eingesetzt werden kann, werden dessen Fussstücke 21A, 21B, welche den Kamm 22 tragen, vorzugsweise mit Lücken 211 versehen, in die die Halteelemente 114A, 114B eingeführt werden können. Das Längsprofil 2 wird daher mit den Lücken 211 auf die Halteelemente 114A, 114B aufgesetzt und anschließend verschoben. Diese besonders vorteilhafte Maßnahme, wie sie in den Figuren 7 und 7a dargestellt ist, kann auch bei einer konventionellen Kabelrinne oder Kabelbahn 100 vorteilhaft eingesetzt werden, wie sie in Figur 1 gezeigt ist.

## Patentansprüche

1. Kabelrinne (1) aus Metall für die Aufnahme von zu installierenden Kabeln (5) mit einem Bodenteil, welches an einer ersten und einer zweiten Seite, die einander gegenüberliegen, je mit einer Seitenwand (12) verbunden ist, die einstückig gefertigt sind und ein Fussstück (121) sowie ein dazu geneigtes Wandstück (122) aufweisen, **dadurch gekennzeichnet, dass** das Bodenteil aus vereinzelten plattenförmigen Bodenelementen (11) besteht, deren Materialdicke geringer ist als die Materialdicke der Seitenwände (12) und die je an einer ersten und einer zweiten Seite durch formschlüssige Verbindungen (9) mit den Fussstücken (121) der Seitenwände (12) verbunden sind, wobei die Bodenelemente (11) entnehmbare, verschiebbare oder drehbare Verschlussstücke (118A, 118B, 118C) halten, anhand derer eine der Durchführung der Kabel 5 dienende Apertur (1180) im Bodenteil freilegbar ist.

2. Kabelrinne (10) nach Anspruch 1, **dadurch gekennzeichnet, dass** zwischen zwei benachbarten Bodenelementen (11) wenigstens ein Verschlussstück (118A, 118B) bewegbar, vorzugsweise verschiebbar oder drehbar gehalten ist, welches die zwischen den beiden benachbarten Bodenelementen (11) vorgesehene Apertur (1180) zumindest teilweise abdeckt.

3. Kabelrinne (10) nach Anspruch 2, **dadurch gekennzeichnet, dass** zwischen zwei benachbarten Bodenelementen (11) wenigstens ein Verschlussstück (118A) vorgesehen ist, welches in Längsrichtung der Kabelrinne (10) verschiebbar gehalten ist, oder dass zwischen zwei benachbarten Bodenelementen (11) wenigstens ein Verschlussstück (118B) vorgesehen ist, welches in Querrichtung der Kabelrinne (10) verschiebbar gehalten ist, oder dass zwischen zwei benachbarten Bodenelementen (11) wenigstens ein Verschlussstück (118C) vorgesehen ist, welches drehbar gehalten ist.

4. Kabelrinne (10) nach einem der Ansprüche 1 bis 3, **dadurch gekennzeichnet, dass** die Bodenelemente (11) geschwächte Zonen aufweisen, die wenigstens ein entnehmbares Verschlussstück (118D) begrenzen.

5. Kabelrinne (10) nach einem der Ansprüche 1 bis 4, **dadurch gekennzeichnet, dass** aus den Bodenelementen (11) eines oder mehrere Halteelemente (114) ausgeschnitten und ausgeformt sind, mittels denen ein parallel zu den Seitenwänden (12) ausgerichtetes Längsprofil (2), vorzugsweise ein T- oder L-Profil, gehalten ist bzw. gehalten werden kann.

6. Kabelrinne (10) nach Anspruch 5, **dadurch gekennzeichnet, dass** aus den Bodenelementen (11) zwei einander zugewandte Halteelemente (114A, 114B) ausgeschnitten und ausgeformt sind, mittels denen die Fusselemente (21A, 21B) eines T-Profils (2) gehalten sind bzw. gehalten werden können.

7. Kabelrinne (10) nach Anspruch 6, **dadurch gekennzeichnet, dass** die Fusselemente (21A, 21B) Ausnehmungen (211) aufweisen, in die die einander zugewandten Halteelemente (114A, 114B) eingeführt werden können, um das T-Profil (2) zu montieren.

8. Kabelrinne (10) nach einem der Ansprüche 1-7, **dadurch gekennzeichnet, dass** Bodenelemente (11) auf den Fussstücken (121) der Seitenwände (12) ruhen und die durch Durchsetzfügen realisierten formschlüssigen Verbindungen (9) vorzugsweise in gleichen Abständen entlang den Fussstücken (121) der Seitenwände (12) angeordnet sind.

9. Kabelrinne (10) nach einem der Ansprüche 1 bis 8, **dadurch gekennzeichnet, dass** das Verhältnis der Materialdicken der Seitenwände (12) der Bodenelemente (11) in einem Bereich von 2:1 bis 10:1 liegt.

10. Kabelrinne (10) nach einem der Ansprüche 1 - 9, **dadurch gekennzeichnet, dass** die Bodenelemente (11) einander überlappen oder voneinander getrennt sind.

11. Kabelrinne (10) nach einem der Ansprüche 1 - 10, **dadurch gekennzeichnet, dass** zwischen wenigstens zwei der Bodenelemente (11) und/oder an den beiden Enden der Kabelrinne (10) Querstreben (14) vorgesehen und mit dem Fussstücken (121) der Seitenwände (12) verbunden sind.

12. Kabelrinne (10) nach einem der Ansprüche 1 - 11, **dadurch gekennzeichnet, dass** aus wenigstens einem der Bodenelemente (11) ein Segment ausgeschnitten ist, in das ein Verschlussstück (118A, 118B, 118C) hinein verschiebbar ist.

13. Kabelrinne (10) nach einem der Ansprüche 1-12, **dadurch gekennzeichnet, dass** die Einformungen (111) mit einer gleichmässigen Höhe in einem Bereich von 1 - 15 Millimeter in die Kabelrinne (10) hinein ragen oder dass die Einformungen (111) mit einer ungleichmässigen Höhe in einem Bereich von 1 - 15 Millimeter in die Kabelrinne (10) hinein ragen und vorzugsweise regelmässig beanstandete Einsenkungen (1111) aufweisen, die der Aufnahme und Ordnungstrennung einzelner Kabel (5) dienen.

14. Kabelrinne (10) nach einem der Ansprüche 1-13, **dadurch gekennzeichnet, dass** die Bodenelemente (11) oder die darin vorgesehenen Einformungen (111) Öffnungen (1112) aufweisen, in die Montageelemente (1113), wie Bügel aus Metall oder Kunststoff, eingesetzt sind.

15. Kabelrinne (10) nach einem der Ansprüche 1-14, **dadurch gekennzeichnet, dass** die Bodenelemente (11) senkrecht zur Hauptachse (x) der Kabelrinne (10) verlaufende Einformungen (111) aufweisen.
